(19) Europäisches Patentamt
European Patent Office
Office européen des brevets

(11) **EP 3 201 017 B1**

(12) **FASCICULE DE BREVET EUROPEEN**

(45) Date de publication et mention
de la délivrance du brevet:
**29.04.2020 Bulletin 2020/18**

(51) Int Cl.:
***B60G 17/06*** *(2006.01)*     ***B62D 6/00*** *(2006.01)*
***B62D 7/15*** *(2006.01)*

(21) Numéro de dépôt: **15791684.2**

(86) Numéro de dépôt international:
**PCT/FR2015/052644**

(22) Date de dépôt: **02.10.2015**

(87) Numéro de publication internationale:
**WO 2016/051105 (07.04.2016 Gazette 2016/14)**

(54) **PROCÉDÉ DE RÉGLAGE DU COMPORTEMENT D'UN VÉHICULE AUTOMOBILE**

VERFAHREN ZUR REGULIERUNG DES VERHALTENS EINES KRAFTFAHRZEUGS

METHOD FOR REGULATING THE BEHAVIOUR OF A MOTOR VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.10.2014 FR 1459450**

(43) Date de publication de la demande:
**09.08.2017 Bulletin 2017/32**

(73) Titulaire: **Renault S.A.S.**
**92100 Boulogne-Billancourt (FR)**

(72) Inventeur: **MOUTON, Xavier**
**F-78280 Guyancourt (FR)**

(56) Documents cités:
**DE-A1- 10 328 685**     **US-A- 4 949 261**
**US-A- 5 483 446**     **US-A- 5 515 275**
**US-A1- 2010 211 261**

## Description

La présente invention relève du domaine des systèmes de commande de véhicules automobiles.

Il est connu, de façon classique, des véhicules automobiles pourvus d'un châssis, d'un habitacle, de roues reliées au châssis par un mécanisme de suspension avec des roues avant directrices commandées par un volant manœuvré par un conducteur dans l'habitacle du véhicule.

Afin d'offrir des agréments de conduite différents sur un même véhicule, il est connu de proposer différents modes de comportement du véhicule. Ces différents modes sont choisis par le conducteur et permettent de faire varier plusieurs paramètres de fonctionnement du véhicule, telles les caractéristiques des amortisseurs, qui peuvent être rendus plus ou moins fermes, la course caractéristique des différentes pédales de frein et d'accélérateur, la réactivité de la direction,...

Toutefois, de telles modifications du comportement dynamique du véhicule, quand bien même il se veut sportif, en privilégiant la réactivité des systèmes, ou économique, en privilégiant une faible consommation, ne permet pas d'offrir des sensations de conduite très différentes.

La présente invention se propose de pouvoir régler le comportement dynamique du véhicule de telle manière à ce que le véhicule puisse présenter un comportement d'une voiture de sport, ou le comportement, très différent, d'une limousine, et ce, à l'aide d'une simple commande accessible par le conducteur.

L'originalité de la présente invention tient dans une utilisation spécifique du dispositif de commande de braquage des roues arrières, développé par le déposant. Avantageusement, cette utilisation peut être combinée avec certains des dispositifs de modification du comportement dynamique du véhicule.

Par le document FR 2 864 001, il est en effet connu d'améliorer le comportement du véhicule et par là-même la sécurité du conducteur et le confort de conduite, par une commande de braquage des roues arrières du véhicule, dite 4RD, cette commande dépendant de l'angle de braquage de roue avant, de données de déplacement du véhicule, notamment la vitesse du véhicule, et d'une consigne antérieure de braquage de roue arrière.

Toutefois, ce procédé, qui permet à un véhicule d'adopter le comportement le plus stable possible, quelle que soit la sollicitation du conducteur ou l'état de la chaussée, n'est pas appliqué dans une conduite multimodale telle qu'expliqué précédemment. De plus, les paramètres ne sont pas modifiables par le conducteur pour définir un mode de conduite spécifique.

Il est également connu, par le document US 4949261, une méthode de contrôle de l'angle de braquage de roues arrière directrices lors d'un changement de mode de roulage sélectionné manuellement afin de ne pas autoriser le calcul d'un nouvel angle de braquage pour un nouveau mode qui serait créateur d'une situation dangereuse.

La présente invention permet, par l'adaptation des paramètres de commande du 4RD, en fonction des différents modes de comportement choisis du véhicule, d'offrir un comportement routier et des sensations de conduite pour l'utilisateur très différents.

La présente invention est atteinte à l'aide d'un procédé de commande du comportement dynamique d'un véhicule automobile, notamment par l'angle de braquage de roue arrière directrice pour un véhicule à au moins trois roues directrices, dans lequel la consigne de roues arrières est liée à la consigne de roues avant par un paramètre de réglage qui peut présenter différentes valeurs, ces valeurs étant accessibles par l'utilisateur par l'intermédiaire d'une commande, selon le mode de comportement du véhicule souhait par l'utilisateur.

En offrant la possibilité de modifier la commande 4RD, il est possible d'offrir au conducteur de nouvelles sensations de conduite, en modifiant les corrections, notamment en virage, du véhicule.

La présente invention sera mieux comprise à l'étude de la description détaillée de quelques modes de réalisation pris à titre d'exemples nullement limitatifs et illustrés par les dessins annexés, sur lesquels :

- les figures 1 et 2 sont des vues schématiques d'un véhicule équipé d'un système de commande de 4RD selon un aspect de l'invention,

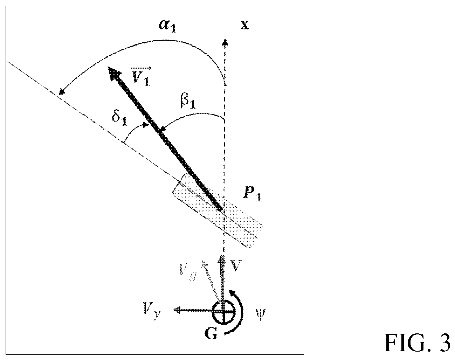

- la figure 3 est une vue schématique d'un pneu illustrant une étape de calcul dans le cadre de l'invention.

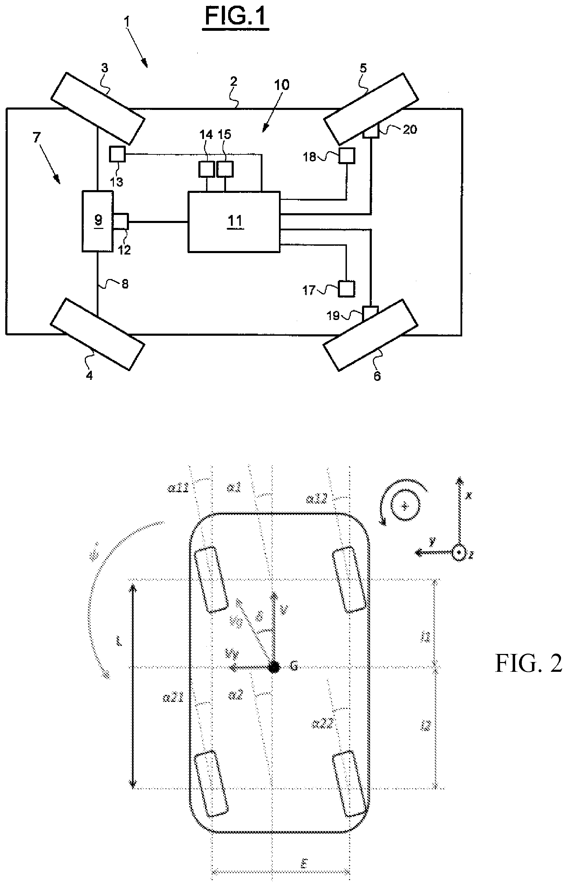

Comme on peut le voir sur la figure 1, le véhicule 1 comprend un châssis 2, deux roues avant directrices 3 et 4 et deux roues arrière directrices 5 et 6.

Le véhicule 1 se complète par un système de direction 7 comprenant une crémaillère 8 disposée entre les roues avant 3 et 4, un actionneur de crémaillère 9 apte à orienter les roues avant 3 et 4 par l'intermédiaire de la crémaillère 8 en fonction d'ordres reçus, de façon mécanique ou électrique, en provenance d'un volant de direction non représenté, à disposition d'un conducteur du véhicule.

Selon l'un des aspects de l'invention, le véhicule comporte un système de commande d'aide au braquage 10 comprenant une unité de commande 11, un capteur 12 de la position de braquage des roues avant 3 et 4, par exemple positionné sur l'actionneur 9, un capteur 13 de la vitesse de rotation des roues avant permettant de déterminer la vitesse V du véhicule, un capteur 14 de la vitesse de lacet $\psi$ du véhicule, ou un estimateur de cette grandeur qui est la vitesse de rotation du véhicule autour de son centre de gravité suivant un axe vertical, et un capteur 15 de l'accélération latérale au centre de gravité du véhicule, ou un estimateur de cette grandeur.

En outre, le système 10 comprend des capteurs 17 et 18 de l'angle de braquage des roues arrière 5 et 6, et des actionneurs 19 et 20 permettant d'orienter lesdites roues arrière 5 et 6. Toutefois, un seul capteur 17 et un seul actionneur 19 peuvent suffire à la détection de l'angle de braquage et à l'orientation des roues arrière 5 et 6. Les capteurs de position et de vitesse peuvent être de type optique ou encore magnétique, par exemple à effet Hall, coopérant avec un codeur solidaire d'une partie mobile tandis que le capteur est non tournant.

L'unité de commande 11 peut être réalisée sous la forme d'un microprocesseur équipé d'une mémoire vive, d'une mémoire morte, d'une unité centrale et d'interfaces d'entrée/sortie permettant de recevoir des informations des capteurs et d'envoyer des instructions, notamment aux actionneurs 19 et 20.

Plus précisément, l'unité de commande 11 comprend un bloc d'entrée 12 recevant les signaux en provenance des capteurs 12 à 14, et notamment la vitesse du véhicule V, la vitesse de lacet $\dot{\psi}$ et l'angle de roues avant $\alpha_1$, $\alpha_2$. La vitesse du véhicule peut être obtenue en faisant la moyenne de la vitesse des roues avant ou des roues arrière telle que mesurée par les capteurs d'un système antiblocage de roues. Dans ce cas, il est prévu un capteur 13 par roue, le système antiblocage de roues comprenant une sortie reliée à une entrée de l'unité de commande 11 pour fournir l'information de vitesse du véhicule. Alternativement, chaque capteur 13 est relié à une entrée de l'unité de commande 11, l'unité de commande 11 effectuant alors la moyenne de la vitesse des roues.

Selon l'invention, les caractéristiques de la prestation 4RD peuvent être modifiées selon le mode de performance dynamique du véhicule choisi. Le dispositif ou la prestation 4RD a pour caractéristique d'agir sur le rayon de braquage de la voiture à souhait. On se réfèrera avantageusement aux documents FR 2 864 001 à FR 2 864 004 pour des explications complémentaires sur le dispositif 4RD.

Les principales caractéristiques sont néanmoins les suivantes : à basse vitesse, les roues arrière braquent dans le sens opposé des roues avant, le système réduit ainsi le rayon de braquage, ce qui permet de gagner en maniabilité et en agilité. La voiture est alors très vive et produit facilement du lacet.

A haute vitesse, à l'inverse, les roues arrière braquent dans le sens des roues avant. Dans le cas d'évitement, la voiture tourne comme si elle se déplaçait latéralement, ce qui réduit la rotation sur elle-même et permet de contrecarrer la force centrifuge au virage. Le comportement du véhicule devient ainsi plus stable.

Le 4RD est donc un système qui a la capacité de faire varier le lacet de la voiture en fonction du comportement recherché.

Pour établir le contrôle de la personnalisation du lacet le modèle bicyclette est utilisé, appliqué à un véhicule 4RD, en référence à la figure 2. On nomme :

- $D_1$ la rigidité de dérive du train avant,
- $D_2$ la rigidité de dérive du train arrière,
- $L_1$ la distance entre le train avant et le centre de gravité du véhicule,
- $L_2$ la distance entre le train arrière et le centre de gravité du véhicule,
- M la masse du véhicule,

En utilisant les notations ci-dessus, les équations de la dynamique projetées sur l'axe transversal (pour les efforts) et sur l'axe vertical (pour les moments) s'écrivent :

$$\begin{cases} M.\gamma_t = F_{Y_1} + F_{Y_2} \\ Iz.\ddot{\psi} = L1.F_{Y_1} - L2.F_{Y_2} \end{cases} \Rightarrow \begin{cases} \gamma_t = \dfrac{F_{Y_1} + F_{Y_2}}{M} \\ \ddot{\psi} = \dfrac{L1.F_{Y_1} - L2.F_{Y_2}}{Iz} \end{cases}$$

où $F_{Y1}$ représente les efforts latéraux appliqués sur les roues avant et $F_{Y2}$ sur les roues arrière, $I_z$ est l'inertie du véhicule autour d'un axe vertical passant par son centre de gravité.

Remarquons que le référentiel du véhicule n'est pas galiléen donc l'accélération transversale s'écrit :

$$\vec{\gamma} = \frac{d\vec{Vg}}{dt} = \frac{\partial \vec{Vg}}{\partial t} + \dot{\psi}.\vec{z} \wedge \vec{Vg}$$

$$\vec{\gamma} = \dot{\vec{Vg}} + V.\dot{\psi}.\vec{y} - Vy.\dot{\psi}.\vec{x}$$

$$\gamma_t = \dot{V}y + V.\dot{\psi}$$

Avec : V : projection du vecteur vitesse du centre de gravité sur l'axe longitudinal du véhicule. Vy : projection du vecteur vitesse du centre de gravité sur l'axe transversal du véhicule.

D'autre part, si on fait les hypothèses suivantes :

- les angles de dérive sont faibles
- la vitesse varie lentement devant les autres grandeurs, alors on peut écrire :

$$\tan(\delta) = \frac{Vy}{V} \Rightarrow \delta = \frac{Vy}{V}$$

En considérant que la vitesse longitudinale V ne varie pas de façon trop rapide dans le temps, alors :

$$\delta = \frac{Vy}{V} \Rightarrow Vy = \delta.V \Rightarrow \dot{V}y = \dot{\delta}.V + \delta.\dot{V} \Rightarrow \dot{V}y \approx \dot{\delta}.V$$

D'où

$$\gamma_t \approx V(\dot{\delta} + \dot{\psi})$$

$$\Rightarrow \begin{cases} V.(\dot{\delta} + \dot{\psi}) = \dfrac{F_{Y_1} + F_{Y_2}}{M} \\ \ddot{\psi} = \dfrac{L1.F_{Y_1} - L2.F_{Y_2}}{Iz} \end{cases} \Rightarrow \begin{cases} \dot{\delta} = \dfrac{F_{Y_1} + F_{Y_2}}{M.V} - \dot{\psi} \\ \ddot{\psi} = \dfrac{L1.F_{Y_1} - L2.F_{Y_2}}{Iz} \end{cases}$$

La modélisation ne tient pas compte des efforts longitudinaux Fx.

Pour les faibles dérives, la force de guidage $F_{Yi}$ (i étant égal à 1 pour le train avant et égal à 2 pour le train arrière), est proportionnelle à la dérive pneumatique. Dans cette zone linéaire, on appelle rigidité de dérive pneumatique Di, le rapport entre Fyi et la dérive δi et on a donc :

$F_{Yi}$ = -Di x δi

A partir des équations ci-dessus et le l'hypothèse des petits angles, il est possible d'exprimer le comportement en lacet d'un véhicule 4RD à partir d'un gain ($T_{gs}$) et du comportement en lacet d'un véhicule 2RD (véhicule dont les roues arrières ne sont pas directrices), par la formule :

$$\frac{\dot{\psi}_{4RD}}{\alpha_1} = T_{gs}.\frac{\dot{\psi}_{2RD}}{\alpha_1}$$

En d'autres termes, le comportement en lacet d'un véhicule peut être exprimé sous la forme :

$$\dot{\psi}_{4RD} = G_{\dot{\psi}}.T_{gs}.\alpha_1$$

Avec :

$$G_{\dot{\psi}} = \frac{V}{L + \dfrac{M.V^2(D2.L2 - D1.L1)}{L.D1.D2}} = \frac{V}{L + V^2.D_a}$$

Et

$$D_a = \frac{M.(D2.L2 - D1.L1)}{D1.D2.L}$$

Le gain en lacet est donc dépendant de deux critères :

- Un critère qui ne dépend que de caractéristiques physiques de la voiture,
- Un gain $T_{gs}$ qui est ajustable, pris égal à 1 pour une voiture 2RD.

Ce résultat, lié aux hypothèses et à la modélisation définie, permet d'offrir un réglage de gain en lacet $T_{gs}$ pour un véhicule. En offrant la possibilité à l'utilisateur de pouvoir modifier ce gain en lacet $T_{gs}$, soit parmi des valeurs fixées à l'avance, soit de manière individuelle parmi une plage de valeurs, on permet à l'utilisateur de retrouver le comportement en lacet de différents véhicules, qui peuvent aller d'un petit véhicule agile en ville, à des berlines plus stables à haute vitesse. Ces valeurs de $T_{gs}$ peuvent être identifées sur d'autres véhicules et rendues accessibles à l'utilisateur via une interface spécifique.

Plus précisément, à partir d'un véhicule 2RD dont on connait la grandeur $G_{\dot{\psi}}(2RD)$ le gain $T_{gs}$ à appliquer pour retrouver le comportement de ce véhicule est donné par $T_{gs} = G_{\dot{\psi}}(2RD)/G_{\dot{\psi}}(4RD)$.

L'angle arrière est alors directement calculé à partir de $T_{gs}$ selon la formule :

$$\alpha 2 = \left(1 - Tgs\right)\alpha 1$$

Selon une variante préférée de l'invention, le système de changement du comportement en lacet de la voiture, pour être totalement agréable et amplifier les différences de sensation perçues, peut être complété d'un système d'amortissement piloté. En effet, lorsque la voiture est très agile, il est nécessaire de maintenir la caisse horizontale en renforçant l'amortissement des suspensions.

On pourra se référer au document FR2971457 au nom du déposant pour le détail du fonctionnement de tels amortisseurs pilotés.

Pour en résumer ledit fonctionnement, de tels amortisseurs peuvent être commandés individuellement, en fonction de différents paramètres.

Une telle association permet d'augmenter les amplitudes disponibles dans les valeurs possibles du gain en lacet $T_{gs}$ en toute sécurité, et augmente, pour le conducteur, la sensation qu'il est au volant de véhicules différents.

Selon un mode de mise en œuvre de l'invention, trois différents modes de conduite pourront être choisis par le conducteur (« Sport », « Confort/Eco », ou « Neutre »), ainsi qu'un mode personnalisé, modes qui correspondent à des réglages prédéfinis des amortisseurs et du 4RD.

Le système d'amortissement variable assure une filtration du profil de route pour un confort optimisé. Le système peut en effet privilégier la filtration de la route et le confort des passagers (mode « Confort/Eco ») ou bien la tenue de la caisse pour accompagner les mouvements secs d'une conduite sportive (mode »Sport »).

Le tableau suivant présente des lois d'amortissement variables en indiquant le niveau d'amortissement relatif ainsi que la tenue de route en fonction des différents modes.

| | Amortissement | Mode "confort/Eco" | Mode "Neutre" | Mode"sport" |
|---|---|---|---|---|
| Basses fréquences (0-2 Hz) | Fluidité | + + | S | - |
| | Progressivité | + + | S | -- |
| | Amplitude | + + | S | - |
| Moyennes fréquences (2-6 Hz) | Rebondisssement sur sièges | -- | S | + + |
| | Mouvements transversaux | S | S | + |

(suite)

|  | | Amortissement | Mode "confort/Eco" | Mode "Neutre" | Mode"sport" |
|---|---|---|---|---|---|
| Hautes fréquences (6-20 Hz) | | Toucher de route - Agrément vibratoire | + + | S | -- |
| | | Battement de roue | + | S | -- |
| | | Hachis moteur | - | S | + |
| Tenue de route | | Maintien de caisse en roulis | S | + | +++ |
| | | Prise de virage / changement de file rapide | S | + | +++ |

Dans les tableaux suivants, la dénomination S est utilisée comme abréviation de Standard et signifie que les amortisseurs et commande de braquage des roues arrière n'ont pas été modifiés, pour le comportement indiqué, par rapport à des réglages qui auraient été ceux d'un véhicule de même gamme, réglages issus de calculs et d'essais, tel qu'il est connu.

L'indication « + » « + + » ou « + + + » signifie que le comportement indiqué est accru par rapport au standard, le nombre de « + » matérialisant l'importance de l'amélioration du comportement souhaité lors du réglage et du pilotage des amortisseurs et lors de la commande de braquage des roues arrière.

Au contraire, l'indication «-» ou «- -» ou «- - -» signifie que le comportement indiqué présente un faible poids lors du réglage et du pilotage des amortisseurs et lors de la commande de braquage des roues arrière, poids d'autant plus faible que le nombre de «-» est élevé.

Conjointement au réglage des amortisseurs selon le tableau présenté, le dispositif 4RD présente également des réglages différents en fonction du mode choisi, tel que précédemment expliqué.

Le tableau ci-dessous indique, dans une présentation analogue au tableau précédent, les variations de réglage du dispositif 4RD.

|  | | Mode "confort/Eco" | Mode "Neutre" | Mode"sport" |
|---|---|---|---|---|
| Maniabilité | Diamètre de braquage (V<20 km/h) | -- | -- | --- |
| | Agrément de direction (20>V>60km/h) roulage ville (démultiplication apparente | -- | -- | - - - - |
| Tenue de route perçue | Stabilité en ligne droite | S | S | S |
| | Changement de file lent | S | + | + + |
| | changement de file rapide | - | + | +++ |
| | conduite en virage (démultiplication apparente) | S | -- | ---- |
| | Maintien de caisse en roulis (dont changement de file) | S | + | +++ |
| Sécurité active | Baïllonnettes VDA | + | + | + |
| | Baïllonnettes ISO | +++ | +++ | +++ |
| | Distance d'arrêt et stabilité en adhérence asymétrique | S | S | S |

A l'instar du tableau précédent, le réglage de la valeur $T_{gs}$ peut être lié à la vitesse du véhicule.

L'association d'amortisseurs variables qui, pour résumer, permet de traiter les mouvements parasites verticaux et de moduler le ressenti de toucher de route (ferme ou moelleux), au dispositif 4RD qui gère plutôt les mouvements transversaux, autorise ainsi une plus grande diversité en combinant selon des amplitudes importantes, leurs efficacités.

Notamment, tel qu'illustré sur les deux tableaux dans les lignes consacrées au maintien de caisse en roulis et changement de file rapide, lorsque le véhicule est très agile (mode « sport », il paraît judicieux de renforcer l'amortissement des suspensions pour maintenir la caisse horizontale. Ce réglage coïncidant des amortisseurs avec une prise de lacet plus importante autorise d'ailleurs des valeurs possibles plus importantes du braquage des roues arrières, ce qui renforce les sensations de conduite sportive dans ce mode « sport ».

L'utilisation d'amortisseurs variables permet donc de compenser le nécessaire compromis de mise au point des liaisons au sol d'un véhicule équipé seul du dispositif 4RD, compromis qui en limite les effets.

Afin de rendre le réglage le plus intuitif pour le conducteur un bouton central de commande permet de choisir un mode d'expérience de conduite spécifique parmi plusieurs modes disponibles. Il peut également être prévu un mode dit « expert » où le réglage du Tgs peut être affiné par le conducteur, tout comme le réglage des suspensions.

Avantageusement, d'autres paramètres de réglage du fonctionnement du véhicule peuvent être associés à chacun des modes, que ce soit l'ambiance lumineuse, sonore, olfactive, le réglage des sièges, les rendus des pédales, plus ou moins dynamiques, la réactivité de la colonne de direction, et le gain dans l'assistance de direction, le rendu au niveau du compteur, les différentes informations disponibles sur les afficheurs, ...

## Revendications

1. Procédé de commande du comportement dynamique d'un véhicule automobile, notamment par l'angle de braquage de roue arrière directrice ($\alpha_2$) pour un véhicule à au moins trois roues directrices, dans lequel

   - la consigne de roues arrières ($\alpha_2$) est liée à la consigne de roues avant ($\alpha_1$) par un paramètre de réglage ($T_{gs}$) qui peut présenter différentes valeurs,
   - le paramètre de réglage ($T_{gs}$) est déterminé par un bouton de commande actionné par l'utilisateur et qui permet de choisir un mode de comportement du véhicule parmi plusieurs modes disponibles,
   - les amortisseurs sont des amortisseurs variables présentant des lois d'amortissement différentes selon le mode souhaité de comportement du véhicule.

2. Procédé selon la revendication 1, dans lequel l'angle de braquage de roue arrière directrice ($\alpha_2$) est relié à l'angle de braquage des roues avant ($\alpha_1$) par la formule :

$$\alpha 2 = \left(1 - Tgs\right)\alpha 1$$

3. Procédé selon l'une des revendications précédentes, dans lequel un mode dit « sport », lorsque sélectionné par l'utilisateur, autorise des valeurs maximales d'angle de braquage des roues arrières directrices ($\alpha_2$) dans le même sens de braquage des roues avant, associées à un comportement renforcé des amortisseurs pour maintenir le véhicule horizontal.

## Patentansprüche

1. Verfahren zur Steuerung der Fahrdynamik eines Kraftfahrzeugs, insbesondere über den Einschlagwinkel des lenkbaren Hinterrads ($\alpha_2$) für ein Fahrzeug mit mindestens drei lenkbaren Rädern, wobei

   - der Einstellwert der Hinterräder ($\alpha_2$) mit dem Einstellwert der Vorderräder ($\alpha_1$) durch einen Regelparameter ($T_{gs}$), der verschiedene Werte haben kann, in Beziehung gesetzt wird,
   - der Regelparameter ($T_{gs}$) durch eine Steuertaste bestimmt wird, die von dem Benutzer betätigt wird und die das Auswählen eines Fahrzeugfahrmodus unter mehreren zur Verfügung stehenden Modi gestattet,
   - die Stoßdämpfer variable Stoßdämpfer sind, die entsprechend dem gewünschten Fahrzeugfahrmodus unterschiedliche Dämpfungsregelungen aufweisen.

2. Verfahren nach Anspruch 1, wobei der Einschlagwinkel des lenkbaren Hinterrads ($\alpha_2$) mit der folgenden Formel mit dem Einschlagwinkel der Vorderräder ($\alpha_1$) in Beziehung gesetzt wird:

$$\alpha_2 = \left(1 - T_{gs}\right)\alpha_1$$

3. Verfahren nach einem der vorhergehenden Ansprüche, wobei ein sogenannter "Sport"-Modus bei Auswahl durch den Benutzer Höchstwerte für den Einschlagwinkel der lenkbaren Hinterräder ($\alpha_2$) in derselben Einschlagrichtung der Vorderräder, die mit einer verstärkten Leistungsfähigkeit der Stoßdämpfer zum Horizontalhalten des Fahrzeugs in Zusammenhang stehen, zulässt.

**Claims**

1. Method for controlling the dynamic behaviour of a motor vehicle, especially by means of the turn angle of the rear steered wheel ($\alpha_2$) for a vehicle comprising at least three steered wheels, wherein

   - the setting for the rear wheels ($\alpha_2$) is related to the setting for the front wheels ($\alpha_1$) by a regulating parameter ($T_{gs}$) which may have different values,
   - the regulating parameter ($T_{gs}$) is determined by a control button actuated by the user and which makes it possible to choose a mode of behaviour of the vehicle from several available modes,
   - the dampers are variable dampers having laws of damping which differ according to the desired mode of behaviour of the vehicle.

2. Method according to Claim 1, wherein the turn angle of the rear steered wheel ($a_2$) is connected to the turn angle of the front wheels ($\alpha_1$) by the formula:

$$\alpha_2 = (1 - T_{gs})\alpha_1$$

3. Method according to either of the preceding claims, wherein a so-called "sport" mode, when selected by the user, authorizes maximum values for the turn angle of the rear steered wheels ($a_2$) in the same steering direction as the front wheels, associated with reinforced behaviour of the dampers in order to keep the vehicle horizontal.

## FIG.1

## FIG. 2

FIG. 3

**EP 3 201 017 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2864001
- US 4949261 A
- FR 2864004
- FR 2971457